(19) Europäisches Patentamt
European Patent Office
Office européen des brevets

(11) Publication number: 0 272 654
A2

(12) **EUROPEAN PATENT APPLICATION**

(21) Application number: 87118868.6

(22) Date of filing: 18.12.87

(51) Int. Cl.4: A01N 47/22, //(A01N47/22, 47:16,47:12,37:26,37:22)

(30) Priority: 19.12.86 IT 2277486
26.05.87 IT 2067687

(43) Date of publication of application:
29.06.88 Bulletin 88/26

(84) Designated Contracting States:
AT BE CH DE ES FR GB GR IT LI LU NL SE

(71) Applicant: S.I.P.C.A.M. S.p.A. Società Italiana Prodotti Chimici e per l'Agricoltura Milano
Viale Gian Galeazzo, 3
I-20136 Milano(IT)

(72) Inventor: Formigoni, Attilio
Via Pietro Micca 11
I-20025 Legnano Milano(IT)

(74) Representative: Faggioni, Marco, Dr. Ing. et al
FUMERO - Studio Consulenza Brevetti
Widenmayerstrasse 4/I
D-8000 München 22(DE)

(54) **Herbicide composition.**

(57) A herbicide composition, particularly effective for the post-emergence deweeding of sugarbeet, forage beet and vegetable beet, is obtained by mixing with inert substances and adjuvants the compound of formula:

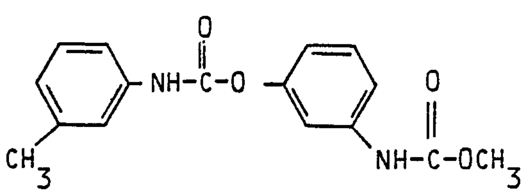

(I)

with one or more compounds of formula:

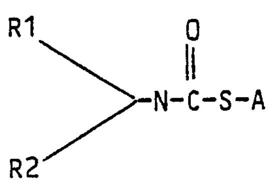

(II)

where R1 and R2 can be alkyls with 2-4 carbon atoms, or R1 and R2 may form a nitrogenous heterocyclic ring with 5 or 6 carbon atoms; and A can be alkyl with 2-4 carbon atoms, or benzyl eventually replaced by halogens on the ring, or even 1,1-dimethylbenzyl eventually replaced by halogen; possibly also adding one or more compounds of formula:

EP 0 272 654 A2

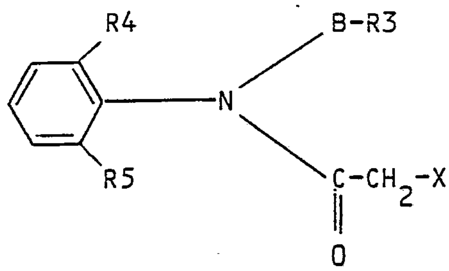

(III)

where R4 and R5 are alkyls with 1-4 carbon atoms; B can be $-CH_2-O-$, $-CH_2-CH_2-O-$,

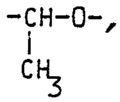, 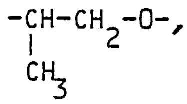, or 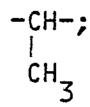;

R3 is alkyl with 1-4 carbon atoms; and X can be chlorine or bromine.

## "HERBICIDE COMPOSITION"

The destruction of weeds on fields of sugarbeet, forage beet or vegetable beet, requires particularly active weed killers, apt to eliminate even those infesting weeds which the weed killers now available on the market are not apt to destroy. At the same time, however, said herbicide compositions should have the requisite of non-phytotoxicity towards such cultivations, which are notoriously sensitive to a great number of weed killers now available.

It is also particularly interesting to be able to dispose of new selective herbicide compositions for beetroot, apt to be employed in post-emergence treatments, namely after the cultivations have emerged from the soil, in that they allow to fight the infesting weeds after they have appeared on the soil surface, preventing at times useless pre-sowing or pre-emergence treatments, or eliminating the weeds not destroyed by said treatments.

According to the present invention, it has unexpectedly been found that a new herbicide composition can be obtained - particularly effective and selective in post-emergence treatments of sugarbeet, forage beet and vegetable beet - by mixing the compound methoxycarbonyl-aminophenyl-3-methyl-phenylcarbamate (Phenmedipham), of formula:

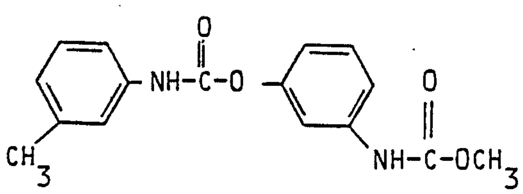

(I)

already used in the post-emergence selective deweeding of beetroot but ineffective against several infesting weeds, together with one or more compounds of formula:

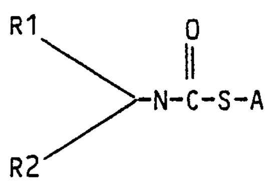

(II)

where R1 and R2 can be alkyls with 2-4 carbon atoms, or R1 and R2 may form a nitrogenous heterocyclic ring with 5 or 6 carbon atoms; and A can be alkyl with 2-4 carbon atoms, or benzyl eventually replaced by halogens on the ring, or even 1,1-dimethylbenzyl eventually replaced by halogen; and possibly also adding one or more compounds of formula:

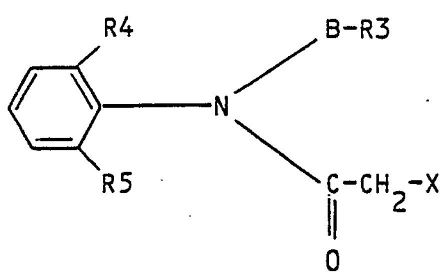

(III)

where R4 and R5 are alkyls with 1-4 carbon atoms; B can be $-CH_2-O-$, $-CH_2-CH_2-O-$,

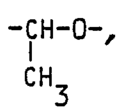 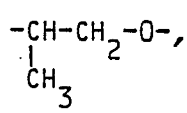 or 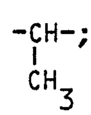

R3 is alkyl with 1-4 carbon atoms; and X can be chlorine or bromine;
together with inert substances and adjuvants.

It is particularly interesting to note that the compounds of formula (II) and (III) are already known weed killers, but mostly used for cultivations other than sugarbeet, forage beet or vegetable beet, and also employed in pre-sowing or pre-emergence (after sowing, but before the cultivations have emerged from the soil) treatments.

The effectiveness of the herbicide composition according to the invention is moreover fully unexpected, because the weed killers of formula (II) and (III), if used in high dosages on their own, in post-emergence treatments of beetroot, are phytotoxic towards the cultivation and scarcely effective on weeds, whereas quite unexpectedly, if used in low dosages mixed with the compound of formula (I), they improve its effectiveness on weeds and are not phytotoxic towards the cultivation.

The present invention thus allows to dispose of a new selective herbicide composition, for the post-emergence treatment of sugarbeet, forage beet and vegetable beet, which has the characteristic of being effective even if its active substances are used in low dosages, with consequent high economical advantages.

There follow some examples of formula (II) compounds:

S-ethyl-dipropyl-thiolcarbamate (EPTC)
S-ethyl-N,N-hexamethylene-thiolcarbamate (Molinate)
S-propyl-dipropyl-thiolcarbamate (Vernolate)
S-ethyl-diisobutyl-thiolcarbamate (Butylate)
S-propyl-butyl-(ethyl)-thiolcarbamate (Pebulate)
S-4-chlorobenzyl-diethyl-thiolcarbamate (Thiobencarb)
S-benzyl-di-sec-butyl-thiolcarbamate (Tiocarbazil)
S-1-methyl-1-phenylethyl-piperidino-thiolcarbamate (Dimepiperate)

There follow some examples of formula (III) compounds:

2-chloro-N-(methoxymethyl)-2,6-diethyl-acetanilide (Alachlor)
2-chloro-N-(2-methoxy-1-methylethyl)-2-ethyl-6-methyl-acetanilide (Metolachlor)
2-chloro-N-(ethoxymethyl)-2-ethyl-6-methyl-acetanilide (Acetochlor)
2-chloro-N-(butoxymethyl)-2,6-diethyl-acetanilide (Butachlor)
2-chloro-N-isopropyl-acetanilide (Propachlor)

The herbicide composition according to the invention can contain the formula (I) compound, together with one or more formula (II) compounds, in a weight ratio ranging from 1:0.25 to 1:8 between compound (I) and compounds (II).

In case of ternary mixtures of formula (I) compound with formula (II) and (III) compounds, the weight ratio between these latter can range from 1:4 to 4:1, the above ratio between compound (I) and compound (II) remaining unchanged.

The herbicide composition according to the invention can be industrially prepared as a water-emulsifiable liquid concentrate or as a concentrated aqueous emulsion, having for example the following composition:

-total active substances (formula I and II compounds, with possible presence of formula III compounds) : 10-60%
-emulsifiers and adjuvants : 15-30%
-solvents and diluents : 75-10%

The expert in the field knows how to make use of the most appropriate emulsifiers apt to guarantee an excellent hydrophilic-hydrophobic equilibrium of the emulsions in water, by employing the non-ionic and/or anionic surfactants or emulsifiers which are most effective for the purpose; several examples of such emulsifiers are contained in the publication: Mc Cutcheon's, Detergents & Emulsifiers - North American and International Edition-1982-Glen Rock, N.Y., USA.

The expert in the field will also take care to use suitable adjuvants, apt to guarantee the long-term stability of the active substances employed in the herbicide composition according to the invention. particular, the formula (I) compound requires the presence of special stabilizers, as for example those indicated in the European Patent No. 102.003, or in the Italian Patent No. 885.435.

Examples of suitable solvents can be different ketones (eg. isophorone, cyclohexanone, acetophenone), alkylamides (eg. diethylformamide), aliphatic esters, hydrocarbons and/or other aliphatic or aromatic compounds.

Other selective weed killers for sugarbeet, forage beet and vegetable beet - to be used in post-emergence treatments - can be added to the composition according to the invention, as for example:

5-amino-4-chloro-2-phenyl-3-(2H)-pyridazinone (Chloridazon)

4-amino-3-methyl-6-phenyl-1,2,4,-triazin-5-(4H)-one (Metamitron)
2-ethoxy-2,3-dihydro-3,3-dimethyl-5-benzofuranyl-methane-sulphonate (Ethofumesate)
3,6-dichloro-2-pyridincarboxylic acid (Clopyralid)
3-cyclohexyl-5,6-trimethylene uracil (Lenacil)
2[(ethoxyamino)butylidene]-ethylthiopropyl-1-3-cyclohexanedione (Sethoxydim)
Butyl-2[4(5-trifluoromethyl)-2-pyridiloxy]phenoxy-propanoate (Fluazifop-butyl)
Ethyl-2[(chloro-6-quinoxalyl-2-oxypropanoate)4-phenoxy]-2-propionate (Quizalofop-ethyl)
2-[4(3-chloro-5-trifluoromethyl)-pyridinyl-2-oxy]phenoxy-propanoate (Haloxyfop)
(E,E)-2[1-(3-chloro-2-propenyloxy-imino)butyl-5-(2-ethylthio-propyl)]-3-hydroxy-2-cyclohexen-1-one (Cloproxydim)
and other similar weed killers.

The herbicide composition according to the invention is employed in post-emergence treatments of sugarbeet, forage beet or vegetable beet, for destroying infesting weeds mostly in their early stage of growth, by distributing for example from 0.25 to 5 kg/ha of active substances in 100-600 litres of water per hectare. By using low dosages of active substances, it is even possible to carry out on the same field 2 or 3 repeated treatments, so as to obtain better results especially on weeds emerging at different times.

The examples which follow help to illustrate the invention, but should not be intended as limiting the same.

Example 1

In a mixer for liquids, the following compounds (quantities in g/l) are mixed together as reported in Tables 1 and 2:

TABLE 1

| COMPOUNDS | Formulations I | II | III | IV | V | VI | VII | VIII | IX | X | XI |
|---|---|---|---|---|---|---|---|---|---|---|---|
| Phenmedipham | 157 | 157 | 157 | 114 | 157 | 157 | 157 | 157 | 157 | 114 | 157 |
| Molinate | 78 | 157 | 314 | 456 | - | - | - | - | - | - | - |
| Vernolate | - | - | - | - | 157 | - | - | - | - | - | - |
| Butylate | - | - | - | - | - | 214 | - | - | - | - | - |
| Thiobencarb | - | - | - | - | - | - | 157 | - | - | - | - |
| Tiocarbazil | - | - | - | - | - | - | - | 314 | 157 | - | - |
| Dimepiperate | - | - | - | - | - | - | - | - | - | 456 | 314 |

| COMPOUNDS | I | II | III | IV | V | VI | VII | VIII | IX | X | XI |
|---|---|---|---|---|---|---|---|---|---|---|---|
| Soitem 8FL 1) | 70 | 50 | 35 | 35 | 50 | 35 | 70 | 50 | 70 | 35 | 50 |
| Soitem 06F 1) | 200 | 150 | 150 | 100 | 150 | 150 | 150 | 150 | 150 | 100 | 150 |
| Isophorone | - - - - - - - - - up to reach 1 litre - - - - - - - - - | | | | | | | | | | |

1) Emulsifiers of SOITEM - Milan.

TABLE 2

| COMPOUNDS | Formulations | | | | | | | | | |
|---|---|---|---|---|---|---|---|---|---|---|
| | I | II | III | IV | V | VI | VII | VIII | IX | X |
| Phenmedipham | 157 | 157 | 157 | 157 | 157 | 157 | 157 | 157 | 114 | 114 |
| Molinate | 157 | - | - | - | - | - | - | - | 114 | - |
| Butylate | - | 157 | - | - | - | - | - | - | - | - |
| EPTC | - | - | 157 | - | - | - | 157 | - | - | - |
| Tiocarbazil | - | - | - | 157 | - | - | - | - | - | - |
| Thiobencarb | - | - | - | - | 39 | - | - | - | - | - |
| Dimepiperate | - | - | - | - | - | 157 | - | 157 | - | 114 |
| Alachlor | 157 | 39 | 157 | 157 | 157 | 157 | - | - | - | - |
| Metolachlor | - | - | - | - | - | - | 157 | 157 | - | - |
| Acetochlor | - | - | - | - | - | - | - | - | - | - |
| Butachlor | - | - | - | - | - | - | - | - | 228 | - |
| Propachlor | - | - | - | - | - | - | -- | - | - | 228 |
| Soitem 8FL 1) | 50 | 50 | 50 | 50 | 50 | 50 | 50 | 50 | 50 | 50 |
| Soitem 06F 1) | 150 | 100 | 150 | 150 | 150 | 150 | 150 | 150 | 100 | 100 |
| Isophorone | - - - - - - - - - up to reach 1 litre - - - - - - - - - | | | | | | | | | |

1) Emulsifiers of SOITEM - Milan.

The above reported formulation examples allow to obtain water-emulsifiable liquid concentrates, suited as selective weed killers in post-emergence treatments of beetroot cultivations.

Example 2

In a greenhouse, air-conditioned at 20-25°C with 60-70° relative humidity, sugarbeet of the Monogem variety are sown in pots together with infesting weeds belonging to the following species:

Alopecurus myosuroides
Galium aparine
Amaranthus retroflexus
Daucus carota

The number of seeded pots is such as to allow repeating the experiment six times, so as to eliminate the variability of each experiment.

When the beetroots have reached the stage of two leaves and the weeds have reached the stage of 2-4 leaves, a herbicide treatment is carried out by means of suitable equipment distributing, in 20 ml of water/sq.m, the weed killers reported in Table 3, formulated according to the technique of the previous Example. In the present Example use has been made, both of the known weed killers based on a single active substance, and of the weed killers according to the present invention based on a mixture of more than one active substance.

30 days after the herbicide treatment, the results reported in the same Table 3 are observed, as damage percentage on sugarbeet and on weeds in respect of non-treated comparison plants.

From the data reported in Table 3, it can be observed how the compositions according to the invention have a herbicide effectiveness higher than the sum of the effectiveness of the respective compositions based on the single active substances, showing an unexpected phenomenon of synergism, with no appreciable damage on the beetroot.

TABLE 3 - Damage percentage on sugarbeet Monogem variety and on weeds, observed 30 days after the treatment -

| | Dosages act.subs. Kg/ha | Sugar beet | Alop. Myos. | Amar. retr. | Gal. Apar. | Daucus Carota |
|---|---|---|---|---|---|---|
| Phenmedipham | 0.5 | 0 | 20 | 50 | 40 | 35 |
| | 0.25 | 0 | 0 | 30 | 10 | 10 |
| Molinate | 1.0 | 0 | 25 | 10 | 30 | 0 |
| | 0.5 | 0 | 0 | 0 | 10 | 0 |
| | 0.25 | 0 | 0 | 0 | 0 | 0 |
| Vernolate | 1.0 | 0 | 30 | 30 | 25 | 0 |
| | 0.5 | 0 | 0 | 0 | 0 | 0 |
| | 0.25 | 0 | 0 | 0 | 0 | 0 |
| Butylate | 1.0 | 0 | 20 | 30 | 20 | 0 |
| | 0.5 | 0 | 0 | 0 | 0 | 0 |
| | 0.25 | 0 | 0 | 0 | 0 | 0 |
| Thiobencarb | 1.0 | 7 | 35 | 40 | 40 | 0 |
| | 0.5 | 0 | 0 | 0 | 0 | 0 |
| | 0.25 | 0 | 0 | 0 | 0 | 0 |
| Tiocarbazil | 1.0 | 5 | 35 | 40 | 35 | 0 |
| | 0.5 | 0 | 0 | 0 | 0 | 0 |
| | 0.25 | 0 | 0 | 0 | 0 | 0 |
| Dimepiperate | 1.0 | 4 | 20 | 35 | 25 | 0 |
| | 0.5 | 0 | 0 | 0 | 0 | 0 |
| | 0.25 | 0 | 0 | 0 | 0 | 0 |
| Phenmedipham | 0.5+1 | 0 | 90 | 100 | 100 | 100 |
| + Molinate | 0.5+0.5 | 0 | 88 | 96 | 100 | 96 |
| | 0.5+0.25 | 0 | 86 | 95 | 93 | 94 |
| | 0.25+1 | 0 | 50 | 75 | 90 | 85 |
| | 0.25+0.5 | 0 | 45 | 75 | 90 | 80 |
| | 0.25+0.25 | 0 | 40 | 70 | 85 | 70 |

| | Dosages act.subs. Kg/ha | Sugar beet | Alop. Myos. | Amar. retr. | Gal. Apar. | Daucus Carota |
|---|---|---|---|---|---|---|
| Phenmedipham | 0.5+1 | 5 | 95 | 100 | 100 | 100 |
| + Vernolate | 0.5+0.5 | 0 | 90 | 95 | 99 | 98 |
| | 0.5+0.25 | 0 | 92 | 90 | 98 | 92 |
| | 0.25+1 | 0 | 65 | 75 | 85 | 80 |
| | 0.25+0.5 | 0 | 60 | 70 | 80 | 70 |
| | 0.25+0.25 | 0 | 50 | 60 | 70 | 65 |
| Phenmedipham | 0.5+1 | 0 | 85 | 100 | 93 | 80 |
| + Butylate | 0.5+0.5 | 0 | 80 | 95 | 85 | 76 |
| | 0.5+0.25 | 0 | 70 | 85 | 80 | 70 |
| | 0.25+1 | 0 | 40 | 60 | 60 | 35 |
| | 0.25+0.5 | 0 | 30 | 50 | 55 | 30 |
| | 0.25+0.25 | 0 | 28 | 45 | 40 | 20 |
| Phenmedipham | 0.5+1 | 10 | 100 | 100 | 100 | 89 |
| + Thiobencarb | 0.5+0.5 | 5 | 95 | 100 | 99 | 88 |
| | 0.5+0.25 | 0 | 91 | 99 | 96 | 85 |
| | 0.25+1 | 0 | 70 | 80 | 85 | 75 |
| | 0.25+0.5 | 0 | 70 | 80 | 75 | 70 |
| | 0.25+0.25 | 0 | 60 | 70 | 75 | 70 |
| Phenmedipham | 0.5+1 | 5 | 100 | 100 | 100 | 90 |
| + Tiocarbazil | 0.5+0.5 | 0 | 97 | 100 | 100 | 87 |
| | 0.5+0.25 | 0 | 95 | 98 | 95 | 80 |
| | 0.25+1 | 0 | 75 | 85 | 80 | 50 |
| | 0.25+0.5 | 0 | 70 | 85 | 70 | 40 |
| | 0.25+0.25 | 0 | 65 | 80 | 70 | 35 |
| Phenmedipham | 0.5+1 | 5 | 95 | 100 | 100 | 85 |
| + Dimepiperate | 0.5+0.5 | 0 | 90 | 99 | 95 | 80 |
| | 0.5+0.25 | 0 | 90 | 95 | 90 | 76 |
| | 0.25+1 | 0 | 50 | 70 | 60 | 50 |
| | 0.25+0.5 | 0 | 45 | 70 | 50 | 45 |
| | 0.25+0.25 | 0 | 30 | 65 | 30 | 30 |

Example 3

In a greenhouse, air-conditioned at 20-25°C with 60-70% relative humidity, sugarbeet of the Monogem variety are sown in pots together with infesting weeds belonging to the following species:

*Alopecurus myosuroides*
*Galium aparine*
*Amaranthus retroflexus*
*Daucus carota*

The number of seeded pots is such as to allow repeating the experiment five times, so as to eliminate the variability of each experiment.

When the beetroots have reached the stage of two leaves and the weeds have reached the stage of 2-4 leaves, a herbicide treatment is carried out by means of suitable equipment distributing, in 20 ml of water/sq.m, the weed killers reported in Table 4, formulated according to the technique of Example 1. In the present Example use has been made, both of the known weed killers based on a single active substance, and of the weed killers according to the present invention based on a mixture of more than one active substance.

30 days after the herbicide treatment, the results reported in the same Table 4 are observed, as damage percentage on sugarbeet and on weeds in respect of non-treated comparison plants.

From the data reported in Table 4, it can be observed how the compositions according to the invention have a herbicide effectiveness higher than the sum of the effectiveness of the respective compositions based on the single active substances, showing an unexpected phenomenon of synergism, with no appreciable damages on the beetroot.

TABLE 4 - Damage percentage on sugarbeet Monogem variety and on weeds, observed 30 days after the treatment -

| | Dosages act.subs. Kg/ha | Sugar beet | Alop. Myos. | Amar. retr. | Gal. Apar. | Daucus Carota |
|---|---|---|---|---|---|---|
| Phenmedipham | 0.5 | 0 | 25 | 35 | 35 | 30 |
| | 0.25 | 0 | 0 | 0 | 0 | 0 |
| Alachlor | 0.5 | 0 | 30 | 40 | 26 | 0 |
| | 0.25 | 0 | 0 | 0 | 0 | 0 |
| Metolachlor | 0.5 | 0 | 35 | 30 | 30 | 0 |
| | 0.25 | 0 | 0 | 0 | 0 | 0 |
| Propachlor | 2.0 | 0 | 0 | 0 | 35 | 0 |
| | 1.0 | 0 | 0 | 0 | 0 | 0 |
| Molinate | 1.0 | 0 | 20 | 0 | 25 | 0 |
| | 0.5 | 0 | 0 | 0 | 0 | 0 |
| EPTC | 1.0 | 5 | 25 | 25 | 30 | 0 |
| | 0.5 | 0 | 0 | 0 | 0 | 0 |
| Tiocarbazil | 1.0 | 4 | 30 | 20 | 20 | 0 |
| | 0.5 | 0 | 0 | 0 | 0 | 0 |
| Dimepiperate | 1.0 | 0 | 20 | 20 | 25 | 0 |
| | 0.5 | 0 | 0 | 0 | 0 | 0 |
| Phenmedipham | 0.5+0.5+1 | 0 | 100 | 100 | 100 | 80 |
| + Alachlor | 0.5+0.5+0.5 | 0 | 92 | 90 | 100 | 75 |
| + Molinate | 0.25+0.5+1 | 0 | 85 | 70 | 100 | 50 |
| | 0.25+0.5+0.5 | 0 | 80 | 65 | 95 | 48 |
| Phenmedipham | 0.5+0.5+1 | 5 | 100 | 100 | 100 | 85 |
| + Alachlor | 0.5+0.5+0.5 | 0 | 98 | 100 | 100 | 82 |
| + EPTC | 0.25+0.5+1 | 0 | 88 | 80 | 100 | 61 |
| | 0.25+0.5+0.5 | 0 | 82 | 72 | 100 | 52 |
| Phenmedipham | 0.5+0.5+1 | 0 | 100 | 100 | 100 | 88 |
| + Alachlor | 0.5+0.5+0.5 | 0 | 95 | 100 | 100 | 80 |
| + Tiocarbazil | 0.25+0.5+1 | 0 | 90 | 92 | 100 | 60 |
| | 0.25+0.5+0.5 | 0 | 80 | 75 | 95 | 58 |

| | Dosages act.subs. Kg/ha | Sugar beet | Alop. Myos. | Amar. retr. | Gal. Apar. | Daucus Carota |
|---|---|---|---|---|---|---|
| Phenmedipham | 0.5+0.5+1 | 0 | 100 | 100 | 100 | 86 |
| + Alachlor | 0.5+0.5+0.5 | 0 | 90 | 100 | 100 | 82 |
| + Dimepiperate | 0.25+0.5+1 | 0 | 75 | 93 | 100 | 75 |
| | 0.25+0.5+0.5 | 0 | 62 | 65 | 96 | 70 |
| Phenmedipham | 0.5+0.5+1 | 10 | 100 | 100 | 100 | 92 |
| + Metolachlor | 0.5+0.5+0.5 | 0 | 100 | 100 | 100 | 90 |
| + Molinate | 0.25+0.5+1 | 0 | 92 | 96 | 100 | 78 |
| | 0.25+0.5+0.5 | 0 | 90 | 92 | 100 | 75 |
| Phenmedipham | 0.5+0.5+1 | 7 | 100 | 100 | 100 | 90 |
| + Metolachlor | 0.5+0.5+0.5 | 0 | 100 | 100 | 100 | 85 |
| + EPTC | 0.25+0.5+1 | 0 | 96 | 100 | 100 | 66 |
| | 0.25+0.5+0.5 | 0 | 92 | 100 | 100 | 60 |
| Phenmedipham | 0.5+0.5+1 | 5 | 100 | 100 | 100 | 90 |
| + Metolachlor | 0.5+0.5+0.5 | 0 | 100 | 100 | 100 | 85 |
| + Tiocarbazyl | 0.25+0.5+1 | 0 | 92 | 95 | 100 | 60 |
| | 0.25+0.5+0.5 | 0 | 90 | 95 | 100 | 56 |
| Phenmedipham | 0.5+0.5+1 | 3 | 100 | 100 | 100 | 91 |
| + Metolachlor | 0.5+0.5+0.5 | 0 | 99 | 100 | 100 | 86 |
| + Dimepiperate | 0.25+0.5+1 | 0 | 90 | 96 | 100 | 74 |
| | 0.25+0.5+0.5 | 0 | 89 | 90 | 100 | 61 |
| Phenmedipham | 0.5+2+0.5 | 0 | 100 | 73 | 100 | 80 |
| + Propachlor | 0.5+1+0.5 | 0 | 92 | 69 | 100 | 86 |
| + EPTC | 0.25+2+0.5 | 0 | 90 | 45 | 95 | 60 |
| | 0.25+1+0.5 | 0 | 85 | 40 | 95 | 56 |

## Claims

1) Herbicide composition for post-emergence treatments of sugarbeet, forage beet and vegetable beet, containing a compound of formula:

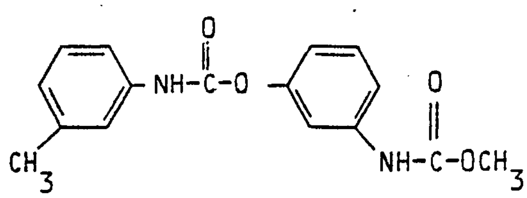

(I)

with one or more compounds of formula:

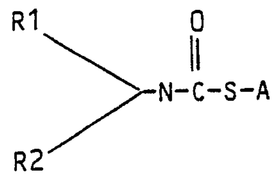

(II)

where R1 and R2 can be alkyls with 2-4 carbon atoms, or R1 and R2 may form a nitrogenous heterocyclic ring with 5 or 6 carbon atoms; and A can be alkyl with 2-4 carbon atoms, or benzyl eventually replaced by halogens on the ring, or even 1,1-dimethylbenzyl eventually replaced by halogen; possibly also adding one or more compounds of formula:

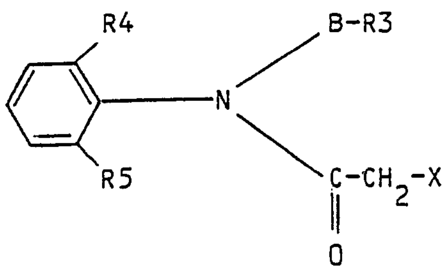

(III)

where R4 and R5 are alkyls with 1-4 carbon atoms; B can be $-CH_2-O-$, $-CH_2-CH_2-O-$,

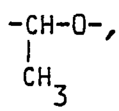, 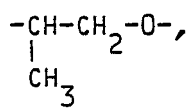, or 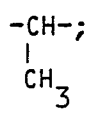;

R3 is alkyl with 1-4 carbon atoms; and X can be chlorine or bromine;
together with inert substances and adjuvants

2) Composition as in claim 1), wherein the weight ratio between the formula (I) compound and the formula (II) compounds ranges from 1:0.25 to 1:8, and the weight ratio between the formula (II) compounds and the formula (III) compounds ranges from 1:4 to 4:1.

3) Composition as in claim 1) or 2), wherein compound (II) is S-ethyl-dipropyl-thiolcarbamate.

4) Composition as in claim 1) or 2), wherein compound (II) is S-ethyl-N,N-hexamethylene-thiolcarbamate.

5) Composition as in claim 1) or 2), wherein compound (II) is S-propyl-dipropyl-thiolcarbamate.

6) Composition as in claim 1) or 2), wherein compound (II) is S-ethyl-diisobutyl-thiolcarbamate.

7) Composition as in claim 1) or 2), wherein compound (II) is S-propyl-butyl-(ethyl)-thiolcarbamate

8) Composition as in claim 1) or 2), wherein compound (II) is S-4-chlorobenzyl-diethyl-thiolcarbamate.

9) Composition as in claim 1) or 2), wherein compound (II) is S-benzyl-di-sec-butyl-thiolcarbamate.

10) Composition as in claim 1) or 2), wherein compound (II) is S-1-methyl-1-phenylethyl-piperidino-thiolcarbamate.

11) Composition as in claim 1) or 2), wherein compound (III) is 2-chloro-N-(methoxymethyl)-2,6-diethyl-acetanilide.

12) Composition as in claim 1) or 2), wherein compound (III) is 2-chloro-N-(2-methoxy-1-methylethyl)-2-ethyl-6-methyl-acetanilide.

13) Composition as in claim 1) or 2), wherein compound (III) is 2-chloro-N-(ethoxymethyl)-2-ethyl-6-methyl-acetanilide.

14) Composition as in claim 1) or 2), wherein compound (III) is 2-chloro-N-(butoxymethyl)-2,6-diethyl-acetanilide.

15) Composition as in claim 1) or 2), wherein compound (III) is 2-chloro-N-isopropyl-acetanilide.

16) Process for the post-emergence deweeding of sugarbeet, forage beet and vegetable beet, wherein use is made of a herbicide composition according to any one of the claims 1) to 15), distributed with conventional techniques in dosages from 0.25 to 5 kg/ha of active substance per treatment, even with repeated treatments on the same cultivation.